# FASCICULE DE BREVET EUROPEEN

(11) **EP 2 766 252 B1**
(45) Date de publication et mention de la délivrance du brevet: **13.04.2016**
(21) Numéro de dépôt: 12775735.9
(22) Date de dépôt: 24.09.2012
(51) Int. Cl.: B62M 15/00, B62M 9/04

(54) **PEDALAGE DIRECT ET INVERSE POUR UNE BICYCLETTE**
VORWÄRTS- UND RÜCKWÄRTSTRITTSYSTEM FÜR EIN FAHRRAD
FORWARD AND REVERSE PEDALLING SYSTEM FOR A BICYCLE

(30) Priorité: 12.10.2011 FR 1103106
(43) Date de publication de la demande: 20.08.2014
(73) Titulaire: CREPIN, Jean Pierre Georges Armand, 93250 Villemomble (FR)
(72) Inventeur: CREPIN, Jean Pierre Georges Armand, 93250 Villemomble (FR)
(74) Mandataire: Chaffraix, Jean
(86) Numéro de dépôt international: PCT/FR2012/000377
(87) Numéro de publication internationale: WO 2013/057388

(56) Documents cités:
- CN-Y- 2 243 434
- FI-A- 838
- JP-A- 2008 304 032

## Description

L'invention se rapporte à un système de **pédalage direct et inverse** pour une bicyclette avec changement de vitesse automatique remplaçant le dérailleur et embrayage fonctionnant à très basse vitesse utilisant une roue à plots, le tout enfermé dans un boîtier carter rempli d'huile.

Dans ce domaine, l'art antérieur comprend les documents CN2243434 qui décrit l'état de la technique le plus proche, JP2008304032 et FI838. Cependant, ces documents illustrent un arrière-plan technologique du système selon l'invention. Ainsi, l'invention propose un système nouveau par rapport à l'art antérieur.

L'invention sera maintenant décrite en référence aux figures annexées.

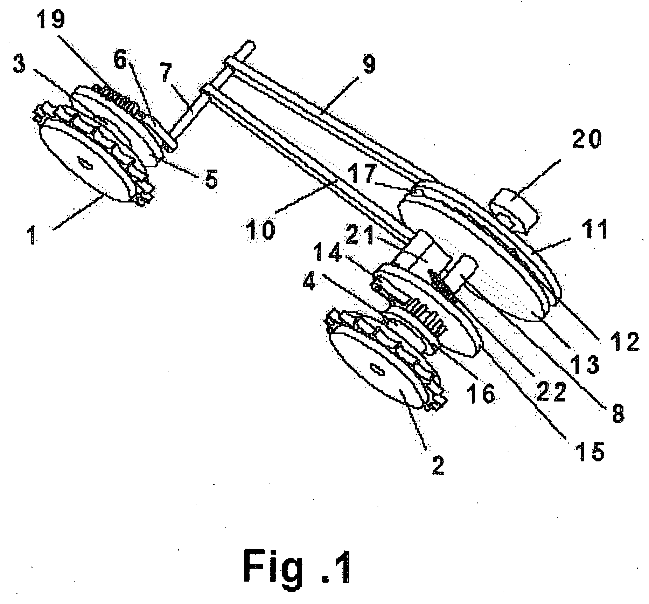

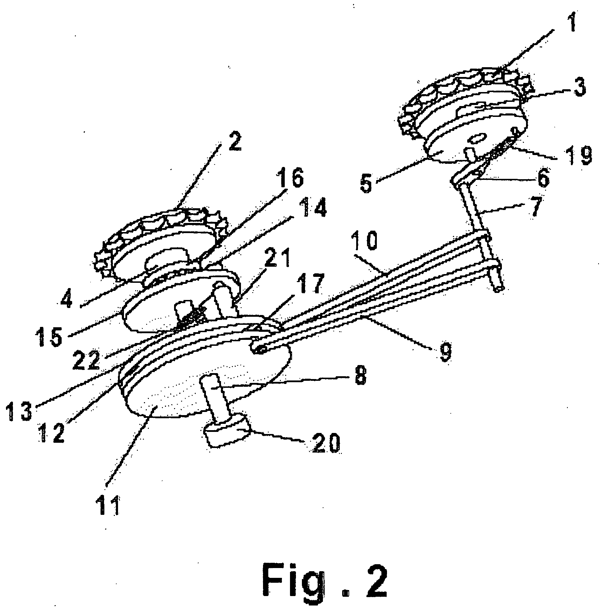

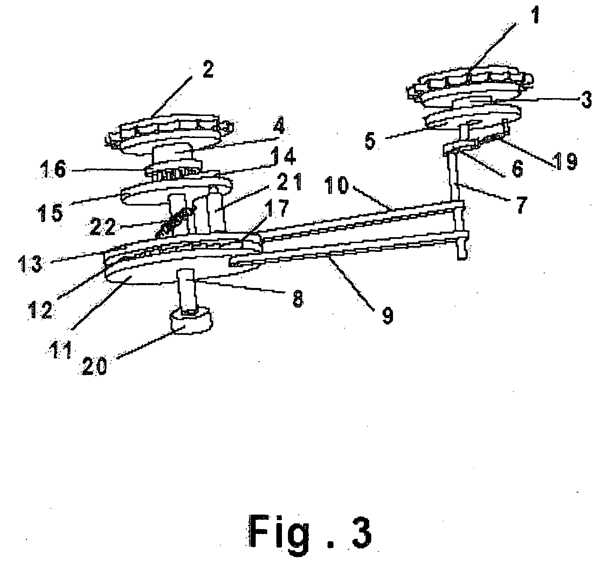

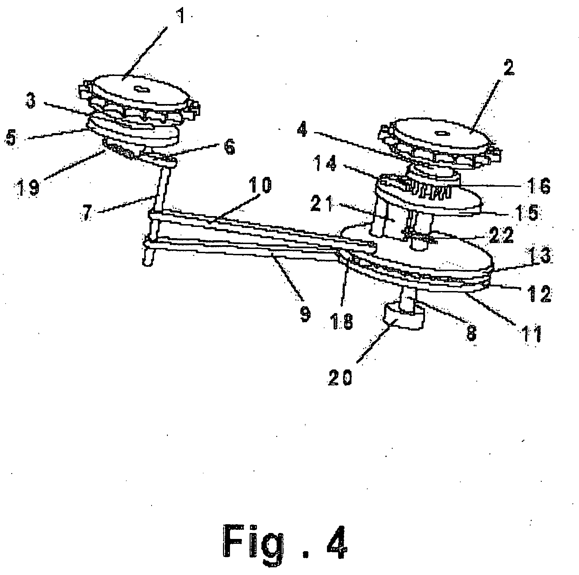

Les figures 1 à 4 illustrent respectivement, une vue de face, une vue arrière, une vue de dessus et une vue de dessous du système selon l'invention.

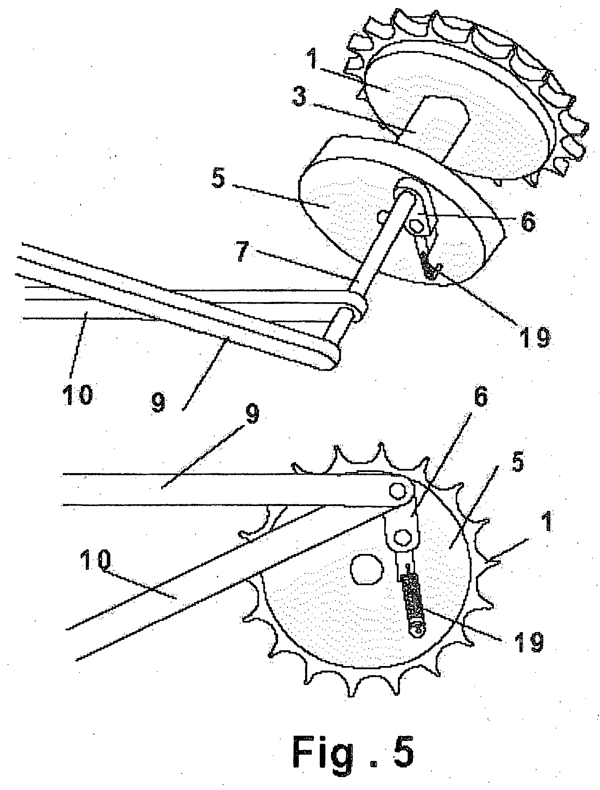

La figure 5 représente une partie du système selon l'invention.

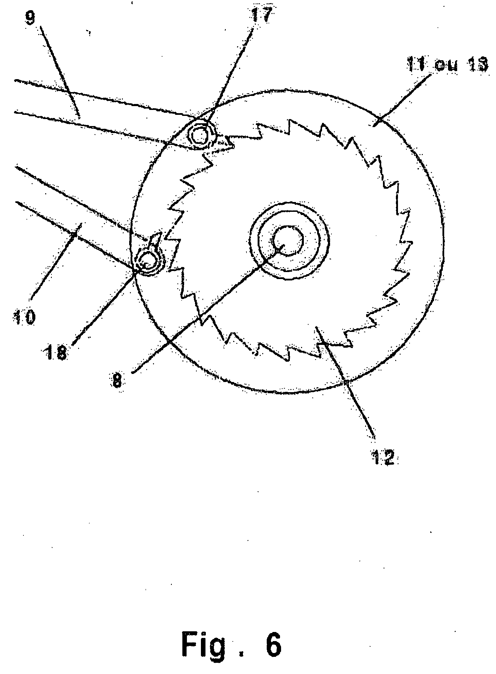

La figure 6 illustre une vue de face de bielles et cliquets en action.

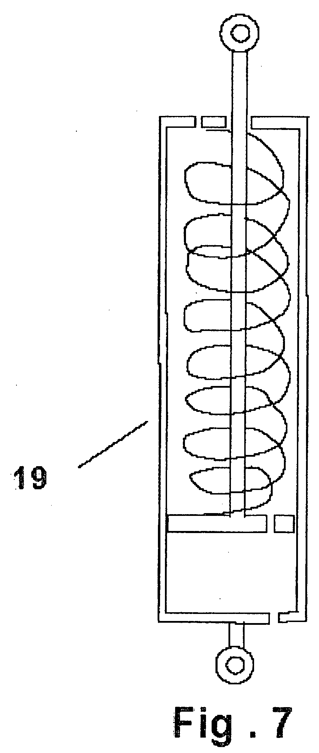

La figure 7 représente un ressort avec amortisseur.

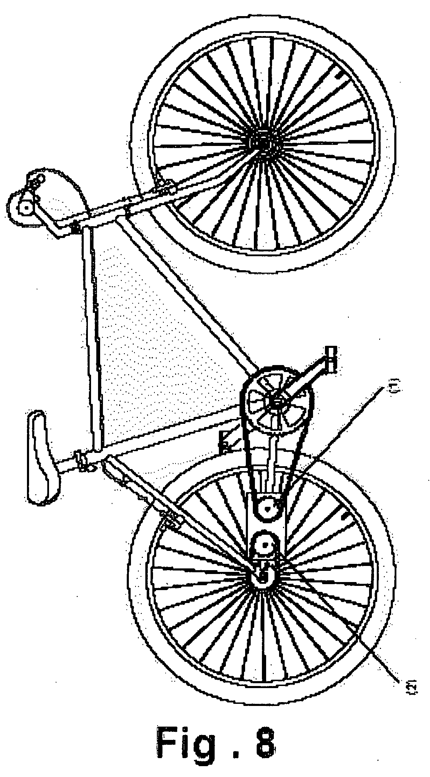

La figure 8 illustre le mécanisme monté sur une bicyclette.

Le système de **pédalage direct et inverse** pour une bicyclette avec changement de vitesse automatique remplace le dérailleur et embrayage fonctionnant à très basse vitesse utilisant une roue à plots (16), le tout enfermé dans un boîtier carter rempli d'huile.

Les deux roues(11) et (13) elles même entraînées par les bielles (9) et (10) font un mouvement alternatif de va et vient inférieur à un demi tour quelque soit le sens de rotation de la roue motrice (1). Les cliquets (17) et (18) des roues (11) et (13) dotés chacun d'un petit ressort pour s'appliquer sur la roue dentée (12) comme dans une roue libre entraînent alternativement la roue (12). Les roues (11) et (13) sont montées sur roulements à billes par rapport à l'axe (8). La roue (12) est solidaire de l'axe (8) et de la roue (15) pour transmettre le mouvement à la roue entraînée (2) par le cliquet (14) et la roue à plots (16). La roue (5) dans le carter est solidaire de la roue motrice (1) à l'extérieur du carter et est dotée d'un bras de longueur variable avec une petite bielle (6), ce qui modifie la course des grandes bielles (9) et (10) et entraîne un **changement de vitesse.** La petite bielle (6) est liée par des roulements à billes sur ses deux axes. La longueur variable dépend de l'importance de l'effort ou du couple sur la roue motrice (1). Plus l'effort est important et plus le ressort avec amortisseur (19) s'allonge ce qui fait plier la petite bielle (6) et approche l'axe (7) de l'axe (3) de la roue motrice (1).

Quand la petite bielle (6) plie et l'axe (7) s'approche de l'axe (3), les courses des bielles (9) et (10) diminuent et les angles de rotation des roues (11) et (13) diminuent aussi ce qui équivaut à un changement de vitesse. Le ressort de rappel (19) de la petite bielle (6) est doté d'un amortisseur pour avoir un fonctionnement régulier. Son ressort est enfermé dans un tube avec deux trous et avec un piston doté d'un trou. Les trois trous sont des fuites calibrées. La présence de plusieurs trous est nécessaire pour que l'amortisseur se remplisse d'huile quand on remplit le carter d'huile. Le passage de l'huile dans les trous ralentit sans les bloquer les mouvements de variation de longueur du ressort.

Les roues (1) et (2) entraînent chacune une chaîne au plateau du pédalier d'une part et au pignon arrière de la bicyclette d'autre part et sont à l'extérieur du carter. Les roulements à billes (3) et (4) permettent de passer à travers le carter. Ils sont de plus étanches pour empêcher toute fuite d'huile vers l'extérieur.

Il n'y a **aucune discontinuité dans l'effort transmis** à la roue (12) et donc à la roue entraînée (2).

On réalise ici un **désaccouplement de la roue entraînée (2) de la roue motrice** (1) si on tente de faire tourner la roue entraînée (2). Ce désaccouplement est réalisé par l'association de la roue (15) solidaire de la roue (12) et de l'axe (8) avec la roue (16) à plots solidaire de la roue entraînée (2).

L'axe (8) est monté sur roulement à billes (20) par rapport au carter et est lié à la roue (16) par un autre roulement à billes.

La rotation de la roue (15) fait basculer son cliquet (14) à cause du frottement hydrodynamique fluide subi par la palette (21) du cliquet (14) puisque tout le mécanisme est enfermé dans le carter rempli d'huile. Le cliquet (14) et la palette (21) sont solidaires par leur axe qui peut tourner à travers de la roue (15). Le basculement du cliquet (14) le fait accrocher sur un des plots de la roue (16) solidaire de la roue entraînée (2). La roue (16) et la roue (2) solidaires ensemble sont liées à l'axe (8) par un roulement à billes d'une part et au carter par le roulement à billes (4)
d'autre part. L'huile assure un excellent graissage, un bon rendement mécanique et est nécessaire pour faire fonctionner l'accouplement des roues (15) et (16). Le cliquet (14) muni d'une palette (21) se déplaçant dans l'huile crée un frottement fluide dynamique proportionnel à la vitesse et donc nul si la roue (15) ne tourne pas. Un petit ressort de rappel (22) recentre le cliquet (14) si la roue (15) s'arrête de tourner ce qui est le cas quand le cycliste arrête de pédaler et que la roue motrice (1) ne tourne plus. Le cliquet (14) n'accroche plus sur un des plots de la roue (16) quand il est recentré. Dans ce cas le ressort de rappel désaccouple automatiquement la roue entraînée (2) qui peut alors tourner librement. La roue (2) tourne avec le roulement à billes étanche (4) passant à travers le carter.

Dans le montage de ce système sur une bicyclette, la roue motrice (1) est reliée au plateau par une première chaîne. La roue entraînée (2) est liée au pignon de la roue arrière de la bicyclette par une seconde chaîne.

Les roues (1) et (2) sont à l'extérieur du carter.

**Les forces de traction sur la roue motrice** (1) **et la roue entraînée** (2) **sont opposées** si bien que la fixation du système sur la bicyclette pourra se faire de façon assez légère.

Le dispositif d'accouplement et de désaccouplement des roues (15) et (16) permet de **ne pas bloquer la roue arrière de la bicyclette** si le cycliste marche à pieds et pousse sa bicyclette en arrière.

Si on souhaite avoir une bicyclette avec **changement de vitesse automatique sans pédalage inverse,** il suffit de doter la roue motrice (1) d'une roue libre pour que l'effort du cycliste soit transmis seulement s'il pédale dans le sens direct.

**La tension du ressort avec amortisseur** (19) **peut être réglée** avec une vis depuis l'extérieur du carter pour ajuster
le comportement du changement de vitesses automatique **à la force du cycliste.** Cette vis se visse sur la roue (5) en calant la roue (5) dans une bonne position angulaire. Pour cela le cycliste ouvre un bouchon en haut du carter pour dévoiler l'accès à cette vis, fait tourner délicatement le pédalier pour que la vis soit en face de la lame du tournevis, serre plus ou moins cette vis pour régler la force du changement de vitesses automatique.

Ce bouchon permet aussi de remplir le carter d'huile. Un second bouchon en bas du carter est prévu pour vider le carter de son huile lors d'une vidange.

Tout le système : « changement de vitesse automatique, énergie transmise à la roue entraînée (2) toujours dans le même sens quelque soit le sens de pédalage de la roue motrice (1) et embrayage automatique à très basse vitesse entre les roues (15) et (16) » peut être utilisé dans tout montage mécanique le nécessitant.

**Le système ne se limite pas à la bicyclette.**

## Revendications

1. Système de **pédalage direct et inverse** pour une bicyclette avec changement de vitesse automatique remplaçant le dérailleur et des bielles (9), le tout enfermé dans un boîtier carter rempli d'huile, **caractérisé en ce que** deux roues(11) et (13) elles même entraînées par les bielles (9) et (10) font un mouvement alternatif de va et vient inférieur à un demi tour quelque soit le sens de rotation d'une roue motrice (1), des cliquets (17) et (18) des roues (11) et (13) dotés chacun d'un petit ressort pour s'appliquer sur une roue dentée (12) comme dans une roue libre entraînent alternativement une roue (12), les roues (11) et (13) sont montées sur roulements à billes par rapport à un axe (8), la roue (12) est solidaire de l'axe (8) et d'une roue (15) pour transmettre le mouvement à une roue entraînée (2) par un embrayage fonctionnant à très basse vitesse, qui utilise un cliquet (14) et une roue à plots (16).

2. Système de pédalage selon la revendication 1 **caractérisé en ce qu'**il comprend une roue (5) dans le carter solidaire de la roue motrice (1) à l'extérieur du carter et dotée d'un bras de longueur variable avec une petite bielle (6), ce qui modifie la course des grandes bielles (9) et (10) et entraîne un **changement de vitesse,** la petite bielle (6) est liée par des roulements à billes sur ses deux axes, la longueur variable dépend de l'importance de l'effort ou du couple sur la roue motrice (1), plus l'effort est important et plus un ressort avec amortisseur (19) s'allonge ce qui fait plier la petite bielle (6) et approche l'axe (7) de l'axe (3) de la roue motrice (1), quand la petite bielle (6) plie et l'axe (7) s'approche de l'axe (3), les courses des bielles (9) et (10) diminuent et les angles de rotation des roues (11) et (13) diminuent aussi ce qui équivaut à un changement de vitesse, le ressort de rappel (19) de la petite bielle (6) est doté d'un amortisseur pour avoir un fonctionnement régulier, son ressort est enfermé dans un tube avec deux trous et avec un piston doté d'un trou, les trois trous sont des fuites calibrées, la présence de plusieurs trous est nécessaire pour que l'amortisseur se remplisse d'huile quand on remplit le carter d'huile, le passage de l'huile dans les trous ralentit sans les bloquer les mouvements de variation de longueur du ressort, les roues (1) et (2) entraînent chacune une chaîne au plateau du pédalier d'une part et au pignon arrière de la bicyclette d'autre part et sont à l'extérieur du carter, les roulements à billes (3) et (4) permettent de passer à travers le carter, ils sont de plus étanches pour empêcher toute fuite d'huile vers l'extérieur.

3. Système de pédalage selon la revendication 1 **caractérisé par aucune discontinuité dans l'effort transmis** à la roue (12) et donc à la roue entraînée (2).

4. Système de pédalage selon la revendication 1 **caractérisé par** un **désaccouplement de la roue entraînée (2) de la roue motrice** (1) si on tente de faire tourner la roue entraînée (2), ce désaccouplement est réalisé par l'association de la roue (15) solidaire de la roue (12) et de l'axe (8) avec la roue (16) à plots solidaire de la roue entraînée (2), l'axe (8) est monté sur roulement à billes (20) par rapport au carter et est lié à la roue (16) par un autre roulement à billes, la rotation de la roue (15) fait basculer son cliquet(14) à cause du frottement hydrodynamique fluide subi par la palette (21) du cliquet (14) puisque tout le mécanisme est enfermé dans un carter rempli d'huile, le cliquet (14) et la palette (21) sont solidaires par leur axe qui peut tourner à travers de la roue (15), le basculement du cliquet (14) le fait accrocher sur un des plots de la roue (16) solidaire de la roue entraînée (2), la roue (16) et la roue (2) solidaires ensemble sont liées à l'axe (8) par un roulement à billes d'une part et au carter par le roulement à billes (4) d'autre part, l'huile assure un excellent graissage, un bon rendement mécanique et est nécessaire pour faire fonctionner l'accouplement des roues (15) et (16), le cliquet (14) muni d'une palette se déplaçant dans l'huile crée un frottement fluide dynamique proportionnel à la vitesse et donc nul si la roue (15) ne tourne pas, un petit ressort de rappel (22) recentre le cliquet (14) si la roue (15) s'arrête de tourner ce qui est le cas quand le cycliste arrête de pédaler et que la roue motrice (1) ne tourne plus, le cliquet (14) n'accroche plus sur un des plots de la roue (16) quand il est recentré, dans ce cas le ressort de rappel désaccouple automatiquement la roue entraînée (2) qui peut alors tourner librement.

5. Système de pédalage selon la revendication 1 **caractérisé par le fait que** sur une bicyclette, la roue motrice (1) est liée au plateau du pédalier par une première chaîne, la roue entraînée (2) est liée au pignon de la roue arrière de la bicyclette par une seconde chaîne, les roues (1) et (2) sont à l'extérieur du carter, les forces de traction sur la roue motrice (1) et **la** roue entraînée (2) sont opposées si bien que la fixation du système sur la bicyclette pourra se faire de façon assez légère.

6. Système de pédalage selon la revendication 1 **caractérisé par le fait que** quand on monte le système sur une bicyclette, le système d'accouplement et de désaccouplement des roues (15) et (16) ou (2) permet de ne pas bloquer la roue arrière de la bicyclette si le cycliste marche à pieds et pousse sa bicyclette en arrière.

7. Système de pédalage selon la revendication 1 **caractérisé par le fait que** l'on peut si on le souhaite avoir une bicyclette avec **changement de vitesse automatique sans pédalage inverse** de sorte qu'il suffit de doter la roue motrice (1) d'une roue libre pour que l'effort du cycliste soit transmis seulement s'il pédale dans le sens direct.

8. Système de pédalage selon la revendication 1 **caractérisé par le fait que la tension du ressort avec amortisseur** (19) **peut être réglée** avec une vis depuis l'extérieur du carter pour ajuster le comportement du changement de vitesses automatique **à la force du cycliste,** cette vis se visse sur la roue (5) en calant la roue (5) dans une bonne position angulaire, pour cela le cycliste ouvre un bouchon en haut du carter pour dévoiler l'accès à cette vis, fait tourner délicatement le pédalier pour que la vis soit en face de la lame du tournevis, serre plus ou moins cette vis pour régler la force du changement de vitesses automatique, ce bouchon permet aussi de remplir le carter d'huile au moment d'une vidange, un second bouchon en bas du carter est prévu pour vider le carter de son huile lors d'une vidange.

9. Système de pédalage selon la revendication 1 **caractérisé par le fait que** tout le système : « changement de vitesse automatique, énergie transmise à la roue entraînée (2) toujours dans le même sens quelque soit le sens de pédalage de la roue motrice (1) et embrayage automatique à très basse vitesse entre les roues (15) et (16) » peut être utilisé dans tout montage mécanique le nécessitant, le système ne se limite pas à la bicyclette.

10. Montage mécanique utilisant un système de pédalage selon l'une quelconque des revendications 1 à 9 **caractérisé par le fait que** tout le système « changement de vitesse automatique, énergie transmise à la roue entraînée (2) toujours dans le même sens quelque soit le sens de pédalage de la roue motrice (1) et embrayage automatique à très basse vitesse entre les roues (15) et (16)» est utilisé dans ledit montage.

11. Bicyclette sur laquelle est monté un système de pédalage selon la revendication 1.

## Patentansprüche

1. Vorwärts- und Rückwärtstrittsystem für ein Fahrrad mit automatischem Schaltgetriebe, das die Gangschaltung und die Pleuelstangen (9) ersetzt, wobei das Ganze in einem mit Öl gefüllten Gehäusekasten eingeschlossen ist, **dadurch gekennzeichnet, dass** zwei Räder (11) und (13), die ihrerseits durch Pleuelstangen (9) und (10) angetrieben sind, eine alternative Hin- und Herbewegung unter einer halben Drehung unabhängig von der Rotationsrichtung eines Antriebsrades (1), der Klinken (17) und (18) der Räder (11) und (13) ausführen, die jeweils mit einer kleinen Feder versehen sind, um sich auf ein Zahnrad (12) wie in einem freien Rad anzuwenden, das alternativ ein Rad (12) antreibt, die Räder (11) und (13) sind auf Kugellagern im Verhältnis zu einer Achse (8) montiert, das Rad (12) ist fest mit der Achse (8) und einem Rad (15) verbunden, um die Bewegung auf ein durch eine bei sehr niedriger Geschwindigkeit funktionierende Kupplung angetriebenes Rad (2) zu übertragen, die eine Klinke (14) und ein Rad mit Kontakten (16) verwendet.

2. Trittsystem gemäß Anspruch 1, **dadurch gekennzeichnet, dass** es ein Rad (5) in dem Gehäuse umfasst, das an der Außenseite des Gehäuses mit dem Antriebsrad (1) fest verbunden ist und mit einem Arm in variabler Länge mit einer kleinen Pleuelstange (6) versehen ist, was den Weg der großen Pleuelstangen (9) und (10) verändert und eine Änderung der Geschwindigkeit nach sich zieht, die kleine Pleuelstange (6) ist durch Kugellager auf ihren zwei Achsen verbunden, die Länge hängt von der Intensität der Belastung oder dem Moment auf dem Antriebsrad (1) ab, je höher die Belastung ist, desto weiter verlängert sich eine Feder mit dem Puffer (19), wodurch das Knicken der kleinen Pleuelstange (6) und das Annähern der Achse (7) an die Achse (3) des Antriebsrades (1) bewirkt wird, wenn die kleine Pleuelstange (6) knickt und die Achse (7) sich der Achse (3) annähert, die Wege der Pleuelstangen (9) und (10) sich verkürzen und die Rotationswinkel der Räder (11) und (13) sich ebenfalls verkürzen, was einer Änderung der Geschwindigkeit gleichkommt, die Rückholfeder (19) der kleinen Pleuelstange (6) ist mit einem Puffer versehen, um einen regelmäßigen Betrieb zu haben, seine Feder ist in einer Röhre mit zwei Löchern eingeschlossen und hat einen mit einem Loch versehenen Kolben, die drei Löcher sind kalibrierte Lecks, das Vorhandensein von mehreren Löchern ist notwendig, damit der Puffer sich mit Öl füllt, wenn das Ölgehäuse gefüllt wird, der Durchgang des Öls in die Löcher verlangsamt die Variationsbewegungen der Länge der Feder, ohne sie sie zu blockieren, wobei die Räder (1) und (2) jeweils eine Kette auf der Platte des Tretlagers einerseits und auf dem hinteren Zapfen des Fahrrads andererseits antreiben und an der Außenseite des Gehäuses sind, die Kugellager (3) und (4) lassen den Durchgang durch das Gehäuse zu, sind besser abgedichtet, um jegliches Ölleck nach außen zu verhindern.

3. Trittsystem gemäß Anspruch 1, **gekennzeichnet durch** keinerlei Unterbrechung bei der auf das Rad (12) und damit auf das angetriebene Rad (2) übertragenen Belastung.

4. Trittsystem gemäß Anspruch 1, **gekennzeichnet durch** eine Entkopplung des angetriebenen Rades (2) des Antriebsrades (1), wenn versucht wird, das angetriebene Rad (2) zu drehen, diese Entkopplung wird **durch** Zuordnung des mit dem Rad (12) und der Achse (8) fest verbundenen Rades (15) und dem Rad (16) mit mit dem angetriebenen Rad (2) fest verbundenen Kontakten realisiert, die Achse (8) ist auf Kugellagern (20) im Verhältnis zum Gehäuse montiert und ist mit dem Rad (16) durch ein anderes Kugellager verbunden, die Rotation des Rades (15) bringt seine Klinke (14) aufgrund der flüssigen hydrodynamischen Reibung zum Kippen, die durch die Palette (21) der Klinke (14) durchgeführt wird, da der gesamte Mechanismus in ein mit Öl gefülltes Gehäuse eingeschlossen ist, die Klinke (14) und die Palette (21) sind **durch** ihre Achse, die sich **durch** das Rad (15) drehen kann, fest miteinander verbunden, das Kippen der Klinke (14) bewirkt dessen Verhaken auf einem der Kontakte des Rades (16), der fest mit dem angetriebenen Rad (2) verbunden ist, das Rad (16) und das Rad (2), die fest miteinander verbunden sind, sind mit der Achse (8) **durch** ein Kugellager einerseits und dem Gehäuse **durch** das Kugellager (4) andererseits verbunden, das Öl gewährleistet eine ausgezeichnete Fettung, eine gute mechanische Leistung und ist notwendig für die Funktion der Kupplung der Räder (15) und (16), wobei die mit einer Palette versehene Klinke (14), die sich in dem Öl verschiebt, eine dynamische, flüssige Reibung schafft, die proportional zur Geschwindigkeit und damit null ist, wenn das Rad (15) sich nicht dreht, eine kleine Rückholfeder (22) spurt die Klinke (14) nach, wenn das Rad (15) sich nicht mehr dreht, was der Fall ist, wenn der Radfahrer nicht mehr tritt und wenn das Antriebsrad (1) sich nicht mehr dreht, die Klinke (14) sich nicht mehr auf einem der Kontakte des Rades (16) verhakt, wenn sie nachgespurt ist, in diesem Fall entkoppelt die Rückholfeder das angetriebene Rad (2) automatisch, das sich dann frei drehen kann.

5. Trittsystem gemäß Anspruch 1, **gekennzeichnet durch** die Tatsache, dass das Antriebsrad (1) bei einem Fahrrad mit der Platte des Tretlagers **durch** eine erste Kette verbunden ist, das angetriebene Rad (2) mit dem Zapfen des hinteren Rades des Fahrrads **durch** eine zweite Kette verbunden ist, die Räder (1) und (2) sich an der Außenseite des Gehäuses befinden, die Zugkräfte auf dem Antriebsrad (1) und dem angetriebenen Rad (2) derart einander gegenüber liegen, dass die Befestigung des Systems auf dem Fahrrad auf recht leichte Weise erfolgen kann.

6. Trittsystem gemäß Anspruch 1, **gekennzeichnet durch** die Tatsache, dass, wenn das System auf einem Fahrrad montiert wird, das Kopplungs- und Entkopplungssystem der Räder (15) und (16) oder (2) es ermöglicht, das hintere Rad des Fahrrads nicht zu blockieren, wenn der Fahrradfahrer zu Fuß geht und sein Fahrrad rückwärts schiebt.

7. Trittsystem gemäß Anspruch 1, **gekennzeichnet durch** die Tatsache, dass, wenn es gewünscht wird, es möglich ist, ein Fahrrad mit automatischem Schaltgetriebe ohne Rücktritt derart zu haben, dass es genügt, das Antriebsrad (1) mit einem freien Rad zu versehen, damit die Belastung des Fahrradfahrers nur übertragen wird, wenn er in der direkten Richtung tritt.

8. Trittsystem gemäß Anspruch 1, **gekennzeichnet, durch** die Tatsache, dass die Spannung der Feder mit Puffer (19) mit einer Schraube von der Außenseite des Gehäuses eingestellt werden kann, um das Verhalten der automatischen Gangschaltung an die Kraft des Fahrradfahrers anzupassen, wobei diese Schraube sich **durch** Verkeilen des Rades (5) in einer guten winkelförmigen Position auf das Rad (5) verschrauben lässt, dafür öffnet der Radfahrer einen Stopfen oben in dem Gehäuse, um den Zugang zu dieser Schraube freizugeben, dreht vorsichtig das Trittlager, damit die Schraube sich gegenüber der Lamelle des Schraubenziehers befindet, zieht diese Schraube mehr oder weniger stark an, um die Kraft des automatischen Schaltgetriebes einzustellen, dieser Stopfen lässt ebenfalls das Füllen des Ölgehäuses bei einem Ölwechsel zu, ein zweiter Stopfen unten am Gehäuse ist vorgesehen, um das Öl bei einem Ölwechsel aus dem Gehäuse zu entleeren.

9. Trittsystem gemäß Anspruch 1, **gekennzeichnet durch** die Tatsache, dass das ganze System: « automatisches Schaltgetriebe, übertragene Energie auf das angetriebene Rad (2) stets in derselben Richtung, unabhängig von Trittrichtung des Richtung des Tretens des Antriebsrades (1) und automatischen Kupplung mit sehr niedrigen Geschwindigkeiten zwischen den Rädern (15) und (16) » bei jeder mechanischen Montage, die dies erfordert, verwendet werden kann, das System beschränkt sich nicht auf das Fahrrad.

10. Mechanische Montage, die ein Trittsystem gemäß Anspruch 1 verwendet, gekennzeichnet dass das ganze System: <<automatische Schaltgetriebe, übertragene Energie auf das angetriebene Rad (2) stets in derselben Richtung, unabhängig von der Trittrichtung des Antriebsrades (1) und automatischen Kupplung mit sehr niedriger Geschwindigkeit zwischen den Rädern (15) und (16) >> beider der mechanischen Montage verwendet ist.

11. Fahrrad, auf dem ein Trittsystem gemäß Anspruch 1 montiert ist.

## Claims

1. Pedaling system for forward and reverse pedaling for a bicycle with automatic gear change replacing the derailleur and rods (9) **characterized in that**, the whole enclosed in a housing case filled with oil, clutch functioning at very low speed the two wheels (11) and (13) themselves driven by the rods (9) and (10) make a reciprocating to and from movement of less than half a turn regardless of the direction of rotation of a drive wheel (1), pawls (17) and (18) on wheels (11) and (13), each provided with a small spring for being applied to the toothed wheel (12) as in a free wheel, alternately drive wheel (12), the wheels (11) and (13) are mounted on ball bearings with respect to the spindle (8), the wheel (12) is secured to the spindle (8) and the wheel (15) in order to transmit the movement to the driven wheel (2) by a clutch functioning at very low speed which uses a the pawl (14) and the engagement wheel (16).

2. Pedaling system according to claim 1, **characterized in that** it comprises a wheel (5) in the case secured to the driving wheel (1) outside the case and provided with a variable-length arm with a small rod (6), which modifies the travel of the large rods (9) and (10) and causes a gear change, the small rod (6) is connected by ball bearings on its two spindles, the variable length depends on the magnitude of the force or torque on the driving wheel (1), the greater the force the more the spring with damper (19) extends, which bends the small rod (6) and moves the spindle (7) closer to the spindle (3) of the driving wheel (1), when the small rod (6) bends and the spindle (7) moves closer to the spindle (3), the travels of the rods (9) and (10) decrease and the rotation angles of the wheels (11) and (13) also decrease, which is equivalent to a gear change, the return spring (19) of the small rod (6) is provided with a damper in order to have even functioning, its spring is enclosed in a tube with two holes and with a piston provided with a hole, the three holes are calibrated leakages, the presence of several holes is necessary so that the damper fills with oil when the case is filled with oil, the passage of oil in the holes slows down without blocking the movements of variation in length of the spring, the wheels (1) and (2) each drive a chain at the front chain wheel on the one hand and at the rear gear wheel of the bicycle on the other hand and are outside the case, the ball bearings (3) and (4) make it possible to pass through the case, they are moreover fluidtight in order to prevent any leaking of oil to the outside.

3. Pedaling system according to claim 1 or claim 2, **characterized by** no discontinuity in the force transmitted to the wheel (12) and therefore to the driven wheel (2).

4. Pedaling system according to any one of claims 1 to 3, **characterized by** a decoupling of the driven wheel (2) from the driving wheel (1) if an attempt is made to turn the driven wheel (2), this decoupling is achieved by the association of the wheel (15) secured to the wheel (12) and the spindle (8) with the engagement wheel (16) secured to the driven wheel (2), the spindle (8) is mounted on a ball bearing (20) with respect to the case and is connected to the wheel (16) by another ball bearing, the rotation of the wheel (15) tilts its pawl (14) because of the fluid hydrodynamic friction undergone by the keeper (21) of the pawl (14) since the entire mechanism is enclosed in a case filled with oil, the pawl (14) and the keeper (21) are secured by their spindle, which can turn through the wheel (15), the tilting of the pawl (14) makes it hook onto one of the studs on the wheel (16) secured to the driven wheel (2), the wheel (16) and the wheel (2) secured together are connected to the spindle (8) by a ball bearing on the one hand and to the case by the ball bearing (4) on the other hand, the oil provides excellent lubrication and good mechanical efficiency and is necessary to make the coupling of wheels (15) and (16) function, the pawl (14) provided with a keeper (21) moving in the oil creates a dynamic fluid friction proportional to the speed and therefore zero if the wheel (15) is not turning, a small return spring (22) recenters the pawl (14) if the wheel (15) stops turning, which is the case when the cyclist stops pedaling and the driving wheel (1) is no longer turning, the pawl (14) no longer hooks onto one of the studs on the wheel (16) when it is recentered, in this case the return spring automatically decouples the driven wheel (2), which can then turn freely.

5. Pedaling system according to claim 1, **characterized by** the fact that, on a bicycle, the driving wheel (1) is connected to the front chain wheel by a first chain, the driven wheel (2) is connected to the gear wheel of the rear wheel of the bicycle by a second chain, the wheels (1) and (2) are outside the case, the traction forces on the driving wheel (1) and the driven wheel (2) are opposed so that the system can be fixed to the bicycle fairly easily.

6. Pedaling system according to claim 1, **characterized by** the fact that, when the system is mounted on a bicycle, the system for coupling and decoupling the wheels (15) and (16) or (2) makes it possible not to lock the rear wheel of the bicycle if the cyclist is walking and pushing his bicycle backwards.

7. Pedaling system according to claim 1, **characterized by** the fact that it is possible if so wished to have a bicycle with automatic gear change without reverse pedaling so that it suffices to provide the driving wheel (1) with a free wheel in order the force of the cyclist is transmitted only if he is pedaling forwards.

8. Pedaling system according to claim 1, **characterized by** the fact that the tension of the spring with damper (19) can be adjusted with a screw from outside the case in order to adjust the behavior of the automatic gear change to the force of the cyclist, this screw is screwed onto the wheel (5) while fixing the wheel (5) in a good angular position, for this purpose the cyclist opens a plug at the top of the case in order to reveal the access to the screw, turns the pedals gently so that the screw is facing the blade of the screwdriver, and tightens this screw to a greater or lesser extent in order to adjust the force of the automatic gear change, this plug also makes it possible to fill the case with oil, at the time of draining, a second plug at the bottom of the case is provided for draining the case of its oil during drainage.

9. Pedaling system according to claim 1, **characterized by** the fact that the entire system: "automatic gear change, energy transmitted to the driven wheel (2) always in the same direction whatever the direction of pedaling of the driving wheel (1) and automatic clutch at very low speed between the wheels (15) and (16)" can be used in any mechanical assembly requiring it, the system is not limited to a bicycle.

10. Mechanical assembly using a pedaling system according to any one of claims 1 to 9, **characterized in that** "automatic gear change, energy transmitted to the driven wheel (2) always in the same direction whatever the direction of pedaling of the driving wheel (1) and automatic clutch at very low speed between the wheels (15) and (16)"is used in said assembly.

11. Bicycle prided with a pedaling system according to any of claim 1 to 9.
